# EUROPEAN PATENT SPECIFICATION

(11) **EP 4 388 238 B1**
(45) Date of publication and mention of the grant of the patent: **18.11.2026**
(21) Application number: 22857953.8
(22) Date of filing: 11.08.2022
(51) Int. Cl.: F16L 27/107, B65G 53/52, F16L 47/03, F16L 47/18, F16L 51/02, F16L 57/06, B65F 5/00, F16L 9/147, F16L 11/11, F16L 57/02

(54) **CONVEYING PIPE ARRANGEMENT OF A PNEUMATIC MATERIAL CONVEYING SYSTEM AND METHOD FOR FORMING A CONVEYING PIPE ARRANGEMENT**
FÖRDERROHRANORDNUNG EINER PNEUMATISCHEN MATERIALFÖRDERANLAGE UND VERFAHREN ZUM AUSBILDEN EINER FÖRDERROHRANORDNUNG
AGENCEMENT DE TUYAU DE TRANSPORT D'UN SYSTÈME PNEUMATIQUE DE TRANSPORT DE MATÉRIAU ET PROCÉDÉ DE FORMATION D'UN AGENCEMENT DE TUYAU DE TRANSPORT

(30) Priority: 16.08.2021 FI 20215858
(43) Date of publication of application: 26.06.2024
(73) Proprietor: Maricap Oy, 01450 Vantaa (FI)
(72) Inventor: SUNDHOLM, Göran, 04310 Tuusula (FI)
(74) Representative: Papula Oy
(86) International application number: PCT/FI2022/050521
(87) International publication number: WO 2023/021236

(56) References cited:
- EP-A1- 0 913 611
- WO-A1-02/02981
- WO-A1-02/02981
- WO-A1-2022/234184
- WO-A2-2012/101322
- CN-A- 108 612 948
- CN-A- 113 007 464
- JP-A- H04 277 394
- JP-A- H06 109 174
- US-A- 3 915 482
- US-A- 4 865 357
- US-A- 5 749 609
- US-A1- 2013 193 681
- US-A1- 2019 360 617

## Description

### FIELD OF THE INVENTION

The invention relates to a conveying pipe arrangement of pneumatic conveying systems for solid materials. The invention also relates to a method for forming a conveying pipe connection. The invention also relates to a connection piece.

### BACKGROUND OF THE INVENTION

In connection with pneumatic material conveying systems, metal pipes have often been used in the conveying pipework. Especially in large systems in which the material conveying distances are long, the conveying pipeworks, especially the main pipeworks, may become in length rather long, typically several kilometre long conveying pipeworks. The pipe diameters of conveying pipeworks of the known systems are rather large, of the order of 200-800 mm, whereby the costs for a pipework formed from metal pipes are rather high.

This matter of fact has been attempted to be alleviated by forming material conveying pipeworks from plastic or a plastic composite material. The pneumatic material conveying systems often convey material placing requirements on wear resistance of the pipe parts. Especially pneumatic conveying systems for solid wastes often transport materials that place their specific requirements on wear resistance of the conveying pipework. Such materials include for example glass, metal, sand and corresponding materials. Pipe parts exposed to wearing often include for example pipe elbows or various connections. It has also been observed that wearing of the plastic material at the inner surface of the pipe increases when the temperature of the pipe rises for example due to friction, such as upon contact of the conveyed material with the inner surface of the pipe, or due to external conditions.

In addition, it is often necessary to provide different radiuses of curvature for the conveying pipe. In pipe parts manufactured from plastic or plastic composite material, thermal treatment of the pipe part is required for the pipe part to remain in the bent shape. The possibilities for thermal treatment are, especially in installation conditions, very limited or even impossible. When bending the pipe, there is also a risk that the pipe folds in such a way that the size or shape of the flow orifice of the pipe will change in an undesirable manner, which especially in pneumatic conveying pipeworks intended for the transport of solid wastes may cause harm to the functionality of the system.

In conveying pipeworks formed especially from plastic pipes or plastic composite pipes, muff connections may generally be used in order to connect separate pipe parts to each other end to end. In these connections, to a muff, i.e. a connection sleeve part, disposed at a connection point such that the ends of the pipe parts to be connected to each other are inside the muff and the muff thus around the connection point, extending in a longitudinal direction of the pipes to a distance from the connection point in both directions. The connection sleeve part or the section of the pipe part to be connected has been provided with thermal resistances or the like, whereby electric current is supplied to the resistances when the connection is being formed, whereby the resistances are heated and a connection is formed between the connection sleeve part and the pipe parts. Such thermoplastic pipe connections have been described for example in publications US 2739829, US 4530521 and US 4906313. Known conveying pipe arrangements are disclose for example in documents US 5749609 A, EP 0913611 A1, WO 02/02981 A1 and CN 108612948 A. A corrugated pipe is disclosed in CN 113 007 464 A, including a composite pressure-bearing pipe, a spirally wound rectangular composite strip forming the corrugation, and a straight outer wall socket formed by filling a pipe end with plastic melt; two such corrugated pipes can be joined using a plastic pipe joint with an internal resistance wire, the joint connecting the pipes by socketing their straight outer wall ends into the joint, and electric fusion welding the resistance wire to form a socket electric fusion welded joint.

Often, in the conveying pipe arrangements there is in practice a need to provide relatively small angular changes in the direction of the conveying pipe. This may be difficult in installation conditions with pipes that comprise reinforcements or are rigid comprising reinforcements or being entirely wear resistant material for example metal.

The object of this invention is to provide a completely new solution for a conveying pipe arrangement of a pneumatic solid material conveying system, by means of which arrangement the problems of the prior art may be avoided. One important object is to provide a conveying pipe arrangement suitable for pneumatic conveying pipeworks of waste transport systems. Another object is to provide, for a conveying pipework formed mainly from plastic or plastic composite material, a solution by means of which the problems of the prior art will be avoided. It is an object to provide a pipe part that may be bent, even in installation conditions, to a desired shape and the connecting of which may be easily accomplished also to a plastic composite or plastic pipe. One object is to provide a pipe part that is suited in its wear resistance properties to be used in the conveying pipeworks of pneumatic conveying systems for solid waste material.

Another object is to provide a solution for connecting the pipe parts of a conveying pipework to each other, wherein the most typical connection welding methods or gluing of plastics, especially plastic pipes, may be used.

### SUMMARY OF THE INVENTION

The invention concerns a conveying pipe arrangement according to claim 1 and a method according to claim 6. Preferred embodiments are detailed in the dependent claims. The invention is based on an idea that a pipe part comprises a combination of a metal reinforcement part, such as a steel pipe, around which a tubular plastic composite layer or plastic layer has been arranged. The plastic pipe may be warmed and the steel pipe may be pushed into the channel of the plastic pipe. As it cools down, the plastic pipe may shrink over the steel pipe. The pipe part may be connected to another pipe part by connecting the plastic or plastic composite parts to each other directly or via a sleeve part by a plastic welding method or by gluing. The arrangement comprises a special connection piece between the pipe parts connected to each other. By means of the connection piece, changes in the direction may be provided between the pipe parts. In one embodiment, the connection piece may be a pipe part. According to one embodiment the connection piece may be a flexible pipe part. According to one embodiment the connection piece may be flexible material. According to one embodiment the connection piece may be plastic. According to one embodiment the connection piece may be composite material. According to one embodiment the connection piece may be metal. According to the invention, the connection piece has been configured to be bent in a first plane, such as vertical plane, by an angle alpha (α) which is 0-20 degrees, and/or in a second plane, such as horizontal plane, by an angle beta (β) which is 0-20 degrees. According to one embodiment the first plane may be a plane passing through a longitudinal axis of the pipe. According to one embodiment, parts limiting the bending may have been formed in the connection piece. According to the invention, parts protruding from the surface of the connection piece and/or recesses and protrusions therebetween have been formed in the connection piece. According to one embodiment, the protruding parts and/or the recesses may comprise sections in a direction transverse from the longitudinal direction of the connection piece. According to the invention, the protruding parts and/or recesses have been arranged to a distance from each other. According to one embodiment, the protruding parts and/or the recesses may comprise annular sections. According to the invention, the protruding parts and/or the recesses comprise segments arranged so as to be distributed along the circumference of the connection piece. According to one embodiment, the parts limiting the bending of the connection piece may have been arranged to limit the bending of the connection piece, for example relative to a longitudinal axis between 0-20 degrees. According to the invention, a distance between the adjacent protruding parts and/or recesses has been arranged to be such that in a bent position, the sides of the adjacent protruding parts and/or recesses have been arranged to limit the degree of the bending of the connection piece when the protruding parts and/or the walls of the recesses are in contact with each other. According to one embodiment, the wall thickness of the connection piece may be smaller in the section comprising protruding parts and/or recesses than in the side section of the connection piece. According to one embodiment, the section comprising protruding parts and/or recesses may be arranged in the connection piece in a section between a first side section and a second side section, for example in a middle section of the connection piece. According to the invention, the connection piece has been arranged to allow angular changes of a different magnitude in a first longitudinal plane, such as vertical plane, than in a longitudinal plane transverse thereto, such as horizontal plane. According to one embodiment, the connection piece may be provided with limiting members enabling bending to different degrees, formed in sectors of its circumference. According to one embodiment, the limiting members allowing bending to different degrees may be different in their dimensions or shape in different sectors. According to one embodiment, the limiting members allowing bending to different degrees may be different in their dimensions or shape in different sectors in such a way that they allow the bending to different degrees in the planes of the different sectors. According to one embodiment, the section comprising protruding parts and/or recesses may be different in different sectors of the circumference, whereby they may allow bending to different degrees. According to one embodiment, the connection piece may have been arranged to allow, in a vertical plane, angular changes of a different magnitude when bent upward from a horizontal plane than when bent downward from a horizontal plane. According to one embodiment, the connection piece may have been arranged to allow a smaller angular change upward from a horizontal plane than downward from a horizontal plane. According to one embodiment, the connection piece may have been arranged to allow bending upward from a horizontal plane of between 0-10 degrees. According to one embodiment, the connection piece may have been arranged to allow bending downward from a horizontal plane of between 0-20 degrees. According to one embodiment, the connection piece may have been arranged to allow a smaller angular change downward from a horizontal plane than upward from a horizontal plane. According to one embodiment, the connection piece may have been arranged to allow bending downward from a horizontal plane of between 0-10 degrees. According to one embodiment, the connection piece may have been arranged to allow bending upward from a horizontal plane of between 0-20 degrees. According to one embodiment, by rotating the connection piece there may be provided a desired angular range in the connection piece to a desired plane of bending.

According to one embodiment, the angle between the directions of the first pipe section and the second pipe section may have been arranged to be changed with the connection piece, the properties of which connection piece may have been arranged to allow angular changes of a different magnitude in a horizontal plane than in a vertical plane. The connection piece may have been arranged to allow, in a vertical plane, angular changes of a different magnitude when bent upward from a horizontal plane than when bent downward from a horizontal plane. The connection piece may have been arranged to allow a smaller angular change upward from a horizontal plane than downward from a horizontal plane. The connection piece may have been arranged to allow bending upward from a horizontal plane of between 0-10 degrees. The connection piece may have been arranged to allow bending downward from a horizontal plane of between 0-20 degrees.

The connection piece may have been arranged to allow a smaller angular change downward from a horizontal plane than upward from a horizontal plane.

The connection piece may have been arranged to allow bending downward from a horizontal plane of between 0-10 degrees. The connection piece may have been arranged to allow bending upward from a horizontal plane of between 0-20 degrees. According to one embodiment, by rotating the connection piece there may be provided a desired angular range in the connection piece to a desired plane of bending. The connection piece may be provided with limiting members enabling bending to different degrees, formed in sectors of its circumference. According to one embodiment, the angle between the directions of the pipe section and the second pipe section may have been arranged to be changed with the connection piece, whereby by rotating the connection piece there may be provided a desired magnitude of the angular range of bending to a desired plane of bending, within the limits allowed by the connection piece.

According to one embodiment, the first pipe part may comprise a reinforcement or a wear resistant inner surface and the second pipe part may comprise a reinforcement or a wear resistant inner surface. According to one embodiment, the length of the connection piece and the angular change between the first and the second pipe part have been arranged according to size and/or speed of transported material, such that the material travels with airflow from the first to the second pipe section, such that it does not substantially contact the connection piece in a wearing manner. According to one embodiment, the length of the connection piece and the angular change between the first conveying pipe section and the second conveying pipe section have been configured according to size and/or speed of transported material, whereby the material travels in the conveying pipe section, in a material conveying pipe of a pneumatic material conveying system, with transport airflow from the first conveying pipe section to the second conveying pipe section without substantially contacting the connection piece in a wearing manner. Thus it is possible to apply a connection piece having preferred properties, which connection piece is not necessarily required to have an equally good wear resistance as a conveying pipe whose inner surface the transported material may substantially contact in a wearing manner.

### LIST OF THE FIGURES

The figures illustrate embodiments which are not covered by the claims but are considered useful for understanding the invention.
Fig. 1 illustrates one embodiment of a conveying pipe arrangement cut according to a vertical plane,
Fig. 2 illustrates one embodiment of a conveying pipe arrangement cut according to a vertical plane,
Fig. 3 illustrates one embodiment of a conveying pipe arrangement cut according to a horizontal plane,
Fig. 4 illustrates a detail of a connection area of one embodiment of a conveying pipe arrangement,
Fig. 5 illustrates one embodiment of a connection piece of a conveying pipe arrangement cut in a vertical plane, and
Fig. 6 illustrates one embodiment of a connection piece of a conveying pipe arrangement from the direction of arrow A of Fig. 5.

### DETAILED DESCRIPTION OF THE INVENTION

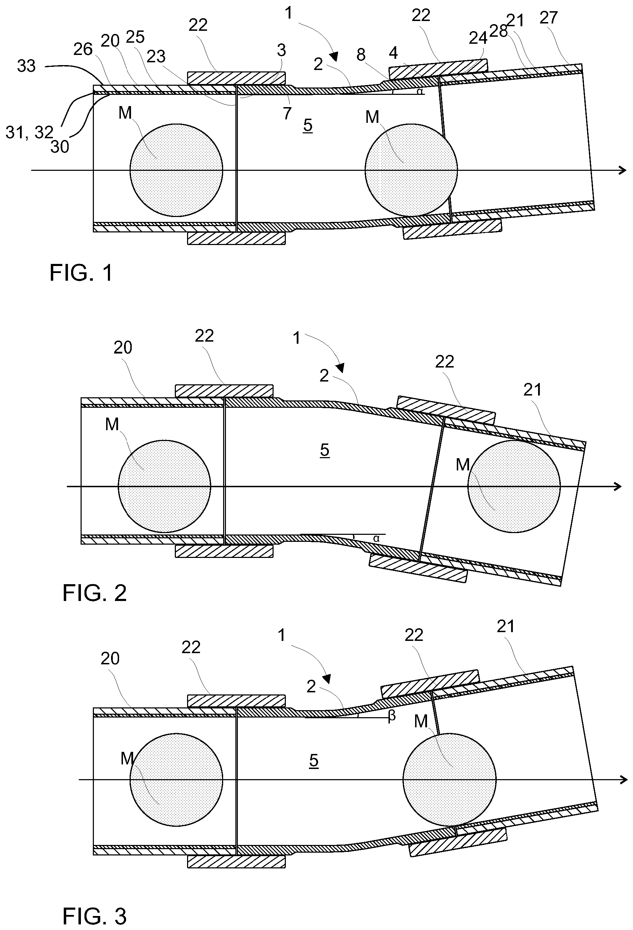

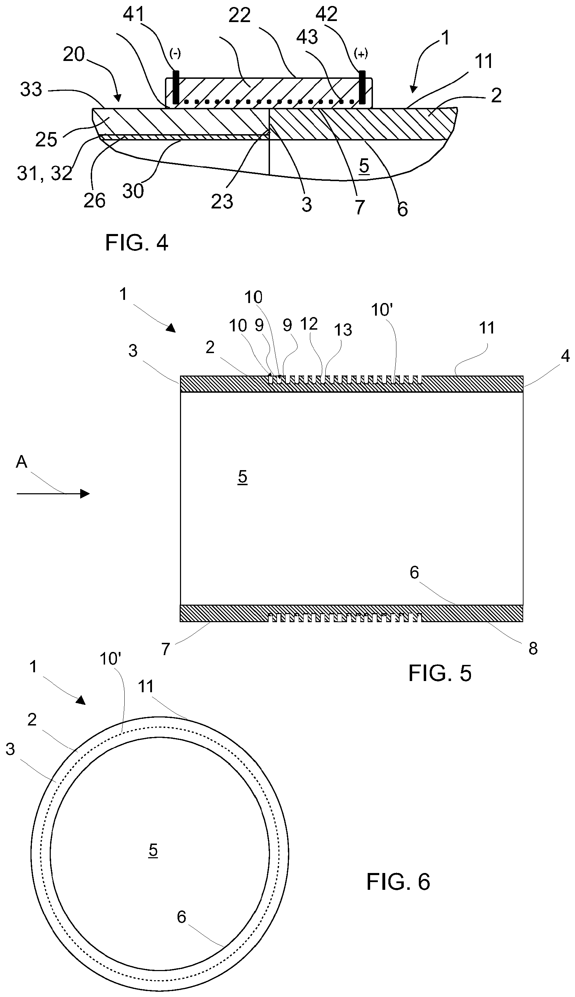

The description includes also embodiments which are not covered by the claims but are considered useful for understanding the invention. Fig. 1 illustrates a partial sectional view of a part of a conveying pipe arrangement of a pneumatic material conveying system according to one embodiment. The conveying pipe arrangement may comprise a first conveying pipe section 20 and a second conveying pipe section 21. The conveying pipe sections 20, 21 may have been connected to each other via a bending piece 1 and muffs 22, i.e. connection sleeve parts 22. An end 23 of the first conveying pipe part 20 may have been arranged against a first end 3 of the bending sleeve 1. The first end 3 of the bending sleeve 1 and of the first conveying pipe section 20 may have been arranged into the muff, i.e. the connection sleeve part 22. The connection sleeve part 22 may have warming means, such as thermal resistance wires, which warm up when electric current is supplied to them. The connection sleeve part 22 may have been provided with connection points 41, 42 known per se, which may have been coupled to a thermal resistance wire 43 (illustrated in Fig. 4), and to which electric current may be connected. The resistance wire 43 may have been arranged as a coil into the connection sleeve part 22. As a result of heating of the resistance wire 43, a connection, such as a thermoplastic connection, may be formed in a manner known per se between the connection sleeve part 22 and the first conveying pipe section 20 and the bending sleeve part 1. Correspondingly an end 24 of the second conveying pipe section 21 may have been arranged against a second end 4 of the bending sleeve 1. The second end 4 of the bending sleeve 1 and of the second conveying pipe section 21 may have been arranged into another muff, i.e. connection sleeve part 22.

The first conveying pipe part 20 may comprise a reinforcement part 26 and a plastic material part 25 formed or arranged over, i.e. around, the reinforcement part. The second conveying pipe part 21 may comprise a reinforcement part 28 and a plastic material part 27 formed or arranged over, i.e. around, the reinforcement part. The conveying pipe part may be formed for example by warming the tubular plastic material part 25, 27 and by inserting the tubular reinforcement part 26, 28 in the channel space of the plastic material part. As the tubular plastic material part 25, 27 cools, it may set around and against the tubular reinforcement part. The inner surface 32 of the plastic material part comes thereby against the outer surface 31 of the reinforcement part. The inner surface 30 of the reinforcement part thereby becomes the channel surface of the conveying pipe section.

The purpose of the reinforcement part may be to increase wear resistance of the conveying pipe section against internal wearing. In the embodiment according to Fig. 1 the reinforcement part 8 in a first pipe part 2 is a pipe part forming the inner surface 9 of the first pipe part 2. Over the outer surface 11 of the reinforcement part 8 there is a plastic material part, the outer surface of which forms the outer surface 14 of the first pipe part 2. The first and/or the second conveying pipe part may have also be formed without a special reinforcement part.

In Fig. 1 the first conveying pipe part has been connected to a connection piece 1 which may in the embodiment of Fig. 1 be plastic material. The inner surface of the wall of the connection piece 1 may form a channel 5 wall.

In the conveying pipe arrangement according to Fig. 1, the first conveying pipe part 20 and the second conveying pipe part 21 have thus been connected to each other by means of a connection piece 1 and connection sleeve parts 22. According to the embodiment of Fig. 1 (and Fig. 4), the inner surface of the first conveying pipe part 20 and the inner surface of the connection piece 1 may be substantially aligned, so that no step hindering material transfer would form at the connection point. Correspondingly, the inner surfaces of the second conveying pipe part 21 and the connection piece 1 may be substantially aligned, so that no step hindering material transfer would be formed. The outer surfaces of the first conveying pipe part 20 and a first connection area 7 of the connection piece 1 may be substantially aligned in the connection area, so that a connection could be formed between the connection sleeve part 22 and the plastic material part of the first conveying pipe part 20 and the plastic material of the wall of the first connection area 7 of the connection piece 1. Correspondingly, the outer surfaces of the second conveying pipe part 21 and a second connection area 8 of the connection piece 1 may be substantially aligned in the connection area, so that a connection could be formed between the connection sleeve part 22 and the plastic material part of the second conveying pipe part 21 and the plastic material of the wall of the second connection area 8 of the connection piece 1. The conveying pipe parts 20, 21 and the connection piece 1 may be connected to each other by so-called electric welding. By warming the electrical resistances 43 disposed inside the parts or in the connection sleeve part 22, a connection is formed between the first conveying pipe part 20 and the connection sleeve part 22 as well as the connection piece 1 and the connection sleeve part 22. Correspondingly by warming the electrical resistances 43 disposed in the other connection sleeve part 22, a connection is formed between the second conveying pipe part 21 and the connection sleeve part 22 as well as the connection piece 1 and the connection sleeve part 22.

In the embodiment of Fig. 1, the connection piece 1 may have been bent upward from a horizontal plane by an angle alpha (α). According to one embodiment, the connection piece 1 has been configured to be bent by an angle alpha (α) in a vertical plane. According to one embodiment, the angle alpha (α) may be 0-20 degrees. According to one embodiment, the angle alpha (α) is, in a vertical plane, when bent upward from a horizontal plane, smaller than when bent downward from a horizontal plane. According to one embodiment, when bent upward the angle alpha (α) is 0.5*angle alpha (α) when bent downward. According to one embodiment, when bent upward the angle alpha (α) may be 0-10 degrees. According to one embodiment, when bent upward the angle alpha (α) may be 0-8 degrees. According to one embodiment, the angle alpha (α) is 0-20 degrees when bent downward (Fig. 2). According to one embodiment, the angle alpha (α) is 0-16 degrees when bent downward from a horizontal plane.

Fig. 3 illustrates one embodiment of the conveying pipe arrangement. Here the connection piece has been configured to be bent in a horizontal plane (in the lateral direction) by an angle beta (β). The angle beta (β) may be 0-20 degrees from a vertical plane. According to one embodiment, the angle beta (β) may be 0-16 degrees in the lateral direction relative to a vertical plane.

According to one embodiment, the length of the connection piece 1 and the angular change alpha (α) and/or beta (β) between a first conveying pipe section 20 and a second conveying pipe section 21 may have been configured according to size and/or speed of transported material M. According to one embodiment, the material M may travel in the conveying pipe section with transport airflow of a pneumatic material conveying system from the first conveying pipe section 20 to the second conveying pipe section 21 without substantially contacting the connection piece 1 in a wearing manner.

The reinforcement part is, according to one embodiment, a pipe part, preferably a metal pipe, most preferably a steel pipe.

The thickness of the wall of the reinforcement part is smaller than the thickness of the wall of the plastic material part. According to one embodiment, the thickness of the reinforcement part is approximately less than 1/2 of the total thickness of the wall of the pipe part, preferably 1/20 - 1/4 of the total thickness of the wall of the pipe part.

The thickness of the wall of the pipe part is in one embodiment approximately 20 - 40 mm. The thickness of the wall of the pipe part may be smaller or greater than this. The thickness of the wall of the pipe part may vary according to application.

According to one embodiment, the plastic material layer is a pipe part separate from the reinforcement part, whereby the reinforcement part may be arranged into the channel space defined by the plastic material layer/plastic material pipe. Thus the tubular layers, plastic material layer and reinforcement part are arranged one within the other.

According to one embodiment, the conveying pipe part may have been secured by combining the plastic material pipe part and the reinforcement part with each other, for example by baking. Also other suitable manufacturing methods are applicable. The plastic material layer may be formed around the reinforcement part for example by extrusion.

The plastic material part may be or comprise wear resistant material. Thus it does not matter if the reinforcement part should wear through at some point, because the plastic material part would ensure sufficient wear resistance. The mechanical shape strength of the pipe part is, however, retained.

According to one embodiment, the conveying pipe part may be bent, for example at or in proximity to the installation site. In the bending, a mandrel may be used in the flow channel of the pipe part in order to prevent buckling of the wall of the pipe part. According to one embodiment, the conveying pipe section or the connection piece 1 does not buckle in the same way as a mere plastic pipe during bending. The reinforcement part prevents deformation of the pipe part (such as return to the shape before the bending) for example after the bending.

The reinforcement part may receive the mechanical stress in the pipe.

The reinforcement part may be, in its wall thickness, thinner than a steel pipe being used as a conveying pipe alone. According to one embodiment, the wall thickness of the reinforcement part may be for example 2-6 mm. According to one embodiment, the strength of the wall of the plastic material pipe may be for example 10-30 mm.

According to one embodiment, the connection piece 1 may comprise a tubular envelope 2 having a first end 3 and a second end 4. The connection piece may comprise a channel 5 between the first end 3 and the second end 4, the channel 5 being delimited by an inner surface 6 of the envelope of the connection piece. The connection piece may comprise a first connection area 7, which may extend to a distance from the first end 3. The connection piece may comprise a second connection area 8 which may extend from the second end 4 to a distance. Limiting members 9, 10 limiting the bending of the connection piece may have been formed in the connection piece. One connection piece 1 is illustrated in Fig. 5. The connection piece 1 may have been formed to be in its mid area, in the area between the first connection area 7 and the second connection area 8, at least partially, thinner in wall thickness. Thereby the connection piece 1 may have been configured to facilitate the bending thereof. The connection piece may have been configured to be bent in a first plane, such as vertical plane, by an angle alpha (α) which may be 0-20 degrees, and/or in a second plane, such as horizontal plane, by an angle beta (β) which may be 0-20 degrees.

The connection piece may have been configured to be bent in a vertical plane passing through a longitudinal axis thereof by an angle alpha (α) and/or in a horizontal plane passing through a longitudinal axis thereof by an angle beta (β). According to one embodiment, the angle alpha (α) may be 0-20 degrees. According to one embodiment, the angle beta (β) may be 0-20 degrees.

Parts 9 protruding from an outer surface of the envelope 6 of the connection piece and/or recesses 10 and protrusions 9 therebetween may have been formed in the connection piece 1. The recesses 10 may have a base 10'. The protrusions/recesses may have sides 12, 13. The connection piece may be tubular, having an outer surface 11 and an inner surface 6. The channel 5 may be formed within the circumference of the inner surface 6 of the connection piece 1 (Fig. 6).

According to one embodiment, the protruding parts 9 and/or the recesses 10 may comprise sections in a direction transverse to the longitudinal direction of the connection piece. According to one embodiment, the adjacent protruding parts 9 and/or recesses 10 may have been arranged to a distance from each other. The protruding parts 9 and/or the recesses 10 may comprise annular sections. The protruding parts 9 and/or the recesses 10 may comprise segments. The protruding parts or segments may have been arranged so as to be distributed along the circumference of the connection piece 1.

The parts 9, 10 limiting the bending of the connection piece 1 may have been arranged to limit the bending of the connection piece, for example relative to a longitudinal axis between 0-20 degrees. The longitudinal axis may have been arranged in the incoming direction of the material conveying pipe section.

A distance between the adjacent protruding parts 9 and/or recesses 10 may have been arranged to be such that in a bent position, the sides 12, 13 of the adjacent protruding parts and/or recesses have been arranged to limit the degree of the bending of the connection piece. According to one embodiment, the sides of the recesses may have been arranged to limit the bending when the walls 12, 13 of the protruding parts 9 and/or the recesses 10 are in contact with each other. According to one embodiment, the wall thickness s of the connection piece 1 may be smaller in the section comprising protruding parts 9 and/or recesses 10 than in the first and/or the second connection area 7, 8 of the connection piece. According to one embodiment, the wall thickness of the connection piece may be smaller in its middle area than in the first or the second connection area.

According to one embodiment, the section comprising protruding parts 9 and/or recesses 10 may have been arranged in the connection piece 1 in a section between the first connection area 7 and the second connection area 8, for example in a middle section of the connection piece.

According to one embodiment, the connection piece 1 may have been arranged to allow angular changes of a different magnitude in a first longitudinal plane (for example vertical plane) than in a longitudinal plane transverse thereto (for example horizontal plane) .

According to one embodiment, limiting members enabling bending to different degrees may have been formed in different sectors of the circumference of the connection piece 1.

According to one embodiment, the limiting members allowing bending to different degrees may be different in their dimensions or shape in different sectors. According to one embodiment, the limiting members allowing bending to different degrees may be different in their dimensions or shape in different sectors in such a way that they allow the bending to different degrees in the planes of the different sectors. According to one embodiment, the section comprising protruding parts and/or recesses may be different in different sectors of the circumference, whereby they may allow bending to different degrees.

According to one embodiment, the connection piece 1 may have been arranged to allow, in a vertical plane, angular changes of a different magnitude when bent upward from a horizontal plane than when bent downward from a horizontal plane or plane of the incoming direction.

According to one embodiment, the connection piece 1 may have been arranged to allow a smaller angular change upward from a horizontal plane or plane of the incoming direction than downward from a horizontal plane.

According to one embodiment, the connection piece 1 may have been arranged to allow bending upward from a horizontal plane or plane of the incoming direction of between 0-10 degrees.

According to one embodiment, the connection piece 1 may have been arranged to allow bending downward from a horizontal plane or plane of the incoming direction of between 0-20 degrees.

According to one embodiment, the connection piece 1 has been arranged to allow a smaller angular change downward from a horizontal plane or plane of the incoming direction than upward from a horizontal plane.

According to one embodiment, in the stage of forming a connection of a pipe connection arrangement, by rotating the connection piece 1 there may be provided a desired angular range allowing the bending in the connection piece to a desired plane of bending.

According to one embodiment, the length of the connection piece 1 and the angular change between a first conveying pipe section 20 and a second conveying pipe section 21 may have been configured according to size and/or speed of transported material M. According to one embodiment, the material M may travel in the conveying pipe section with transport airflow of a pneumatic material conveying system from the first conveying pipe section 20 to the second conveying pipe section 21 without substantially contacting the connection piece 1 in a wearing manner.

According to one embodiment, a conveying pipe arrangement of a pneumatic material conveying system may comprise a first conveying pipe section 20 and a second conveying pipe section 21 and a connection piece 1 between the first conveying pipe section and the second conveying pipe section, whereby the connection piece may be a connection piece as described above or below. The connection piece 1 may have been connected from a first end 3 thereof to the first conveying pipe section 20 and from a second end 4 thereof to the second conveying pipe section 21.

According to one embodiment, in the conveying pipe arrangement, at a connection between the first conveying pipe section 20 and/or the second conveying pipe section 21 and the connection piece 1, a connection sleeve part 22 may have been arranged to be used, which connection sleeve part may have been arranged to enclose a connection area of the first conveying pipe section 20 and/or the second conveying pipe section 21 and the connection piece 1 disposed within the connection sleeve part 22.

According to one embodiment, the connection sleeve part 22 may have been configured as a welding sleeve, comprising heating means, such as a resistance 43.

According to one embodiment, the connection piece 1 may comprise plastic material or metal or has been formed from plastic or metal.

According to one embodiment, the first conveying pipe section 20 and/or the second conveying pipe section 21 may be a composite-steel pipe or a composite pipe. According to one embodiment, the composite may be plastic material. According to one embodiment, the plastic material may be for example polyethylene, for example type PE100. According to one embodiment, the steel pipe may be structural steel, for example type S235. According to one embodiment, the steel pipe may be painted on the outside and on its inner surface.

According to one embodiment, the invention may relate to a method for forming a conveying pipe arrangement of a pneumatic material conveying system. The conveying pipe arrangement may comprise at least one first conveying pipe section 20 and one second conveying pipe section 21, a connection sleeve part 22, and optionally a connection piece 1 between the first conveying pipe section 20 and the second conveying pipe section 21. In the method the first conveying pipe section 21 may be connected to the second pipe section directly or via the connection piece 1 by inserting the ends of the pipe parts 20, 21 to be connected to each other into the connection sleeve part 22, i.e. into the connection sleeve, and by forming a thermoplastic connection with the pipe part 20, 21 and the connection sleeve part 22, and/or optionally with the connection piece 1 and the connection sleeve part 22.

According to one embodiment, in the conveying pipe arrangement the direction of the channel of the conveying pipe section may be changed by bending the connection piece 1 arranged between the first conveying pipe section 20 and the second conveying pipe section 21 in a first plane, such as vertical plane, by an angle alpha (α) and/or in a second plane, such as horizontal plane, by an angle beta (β).

According to one embodiment, the angle alpha (α) may be 0-20 degrees. According to one embodiment, the angle alpha (α) may be at most 8 degrees upward from a plane of the incoming direction. According to one embodiment, the angle alpha (α) may be at most 7.5 degrees upward. According to one embodiment, the angle alpha (α) may be at most 16 degrees downward from a plane of the incoming direction. According to one embodiment, the angle alpha (α) may be at most 15 degrees downward.

According to one embodiment, the angle beta (β) may be 0-20 degrees. According to one embodiment, the angle beta (β) is at most 17 degrees relative to a vertical plane of the incoming direction. According to one embodiment, the angle beta (β) is at most 15 degrees in the lateral direction from a vertical plane of the incoming direction.

According to one embodiment, the direction of the channel is changed upward relative to the incoming direction by a maximum of 10 degrees, preferably by a maximum of 8 degrees, or downward relative to the incoming direction by a maximum of 20 degrees, preferably by a maximum of 17 degrees.

According to one embodiment, the direction of the channel is changed in a lateral direction relative to the incoming direction by a maximum of 20 degrees, preferably by a maximum of 17 degrees.

According to one embodiment, at least one of the conveying pipe sections 20, 21 may be formed by arranging a plastic material pipe 25, 27 over a reinforcement pipe 26, 28 or a reinforcement pipe in the channel space of a plastic material pipe by heating the plastic material pipe 25, 27 and by moving the plastic material pipe 25, 27 and/or the reinforcement pipe 26, 28 relative to each other, so as to form a conveying pipe section wherein the inner surface may be the inner surface 30 of the reinforcement pipe and the outer surface may be the outer surface 33 of the plastic material pipe. According to one embodiment, the outer surface 31 of the reinforcement pipe (inner pipe) may be disposed against the inner surface 32 of the plastic material pipe (outer pipe).

The conveying pipe arrangement and the method according to the invention are suited particularly well to be used in the connections of a conveying pipework of pneumatic waste pipe transport systems. The pipe sizes may be rather large in diameter, for example typically 200-500 mm.

## Claims

1. A conveying pipe arrangement for a pneumatic material conveying system, comprising a connection piece (1) for pipe connections, which connection piece (1) comprises a tubular envelope (2) having a first end (3) and a second end (4), which connection piece comprises a channel (5) between the first end (3) and the second end (4), the channel (5) being delimited by an inner surface (6) of the envelope of the connection piece, which connection piece comprises a first connection area (7) extending to a distance from the first end (3) and a second connection area (8) extending from the second end (4) to a distance, which connection piece has been configured to be bent in a first plane, such as vertical plane, by an angle alpha (α) which is 0-20 degrees, and/or in a second plane, such as horizontal plane, by an angle beta (β) which is 0-20 degrees,
wherein parts (9) protruding from an outer surface of the envelope (6) of the connection piece and/or recesses (10) and protrusions (9) therebetween have been formed in the connection piece (1),
wherein the adjacent protruding parts (9) and/or recesses (10) have been arranged to a distance from each other,
wherein the distance between the adjacent protruding parts (9) and/or recesses (10) has been arranged to be such that in a bent position, the sides (12, 13) of the adjacent protruding parts and/or recesses have been arranged to limit the degree of the bending of the connection piece when the walls (12, 13) of the protruding parts (9) and/or the recesses (10) are in contact with each other,
wherein the connection piece (1) has been configured to allow angular changes of a different magnitude in a first longitudinal plane, such as vertical plane, than in a longitudinal plane transverse thereto, such as horizontal plane,
wherein the conveying pipe arrangement comprises a first conveying pipe section (20) and a second conveying pipe section (21) and the connection piece (1) is between the first conveying pipe section and the second conveying pipe section, whereby the connection piece is connected from the first end (3) thereof to the first conveying pipe section (20) and from the second end (4) thereof to the second conveying pipe section (21),
wherein the protruding parts (9) and/or the recesses (10) comprise segments arranged so as to be distributed along the circumference of the connection piece (1), wherein, at a connection between the connection piece (1) and the first conveying pipe section (20) and/or the second conveying pipe section (21), a connection sleeve part (22) of the conveying pipe arrangement is arranged to be used, which connection sleeve part is arranged to enclose the connection area of the first conveying pipe section (20) or of the second conveying pipe section (21) and the connection piece (1) disposed within the connection sleeve part (22), and
wherein the connection sleeve part (22) has been configured as a welding sleeve, comprising heating means, such as a resistance (43).

2. The conveying pipe arrangement according to claim 1, wherein the protruding parts (9) and/or the recesses (10) comprise annular sections.

3. The conveying pipe arrangement according to any one of claims 1 or 2, wherein the wall thickness (s) of the connection piece (1) is smaller in the section comprising protruding parts (9) and/or recesses (10) than in the first and/or the second connection area (7, 8) of the connection piece.

4. The conveying pipe arrangement according to any one of claims 1 - 3, wherein the section comprising protruding parts (9) and/or recesses (10) has been arranged in the connection piece (1) in a section between the first connection area (7) and the second connection area (8), for example in a middle section of the connection piece.

5. The conveying pipe arrangement according to any one of claims 1 - 4, wherein in the stage of forming a connection of the pipe connection arrangement, by rotating the connection piece (1) there is provided a desired angular range allowing the bending in the connection piece to a desired plane of bending.

6. A method for forming a conveying pipe arrangement of a pneumatic material conveying system, which conveying pipe arrangement is according to any one of claims 1 to 5, comprising at least one first conveying pipe section (20) and one second conveying pipe section (21), a connection sleeve (22), and a connection piece (1) between the first conveying pipe section (20) and the second conveying pipe section (21), in which method the first conveying pipe section (21) is connected to the second pipe section via the connection piece by inserting the end of one of the pipe sections (21, 21, 1) to be connected to each other into the connection sleeve (22) and by forming a thermoplastic connection with one of the pipe sections (20, 21) and the connection sleeve (22), and with the connection piece (1) and the connection sleeve (22).

7. The method according to claim 6, wherein in the conveying pipe arrangement, the direction of one of the channel of the conveying pipe sections is changed by bending the connection piece (1) arranged between the first conveying pipe section (20) and the second conveying pipe section (21) in a first plane, such as vertical plane, by an angle alpha (α) and/or in a second plane, such as horizontal plane, by an angle beta (β).

8. The method according to any one of claims 6 - 7, wherein at least one of the conveying pipe sections (20, 21) is formed by arranging a plastic material pipe (26, 28) over a reinforcement pipe (25, 27) or a reinforcement pipe in the channel space of a plastic material pipe by heating the plastic material pipe (26, 28) and by moving the plastic material pipe and/or the reinforcement pipe relative to each other, so as to form a conveying pipe section wherein the inner surface is the inner surface of the reinforcement pipe and the outer surface is the outer surface of the plastic material pipe.

## Patentansprüche

1. Förderrohranordnung für ein pneumatisches Materialfördersystem, umfassend ein Verbindungsstück (1) für Rohrverbindungen, welches Verbindungsstück (1) eine rohrförmige Hülle (2) umfasst, die ein erstes Ende (3) und ein zweites Ende (4) aufweist, welches Verbindungsstück einen Kanal (5) zwischen dem ersten Ende (3) und dem zweiten Ende (4) umfasst, wobei der Kanal (5) durch eine innere Oberfläche (6) der Hülle des Verbindungsstücks begrenzt ist, welches Verbindungsstück einen ersten Verbindungsbereich (7), der sich bis zu einer Distanz von dem ersten Ende (3) erstreckt, und einen zweiten Verbindungsbereich (8), der sich von dem zweiten Ende (4) bis zu einer Distanz erstreckt, umfasst, welches Verbindungsstück dazu konfiguriert worden ist, in einer ersten Ebene, wie etwa einer vertikalen Ebene, um einen Winkel alpha (α), der 0-20 Grad beträgt, und/oder in einer zweiten Ebene, wie etwa einer horizontalen Ebene, um einen Winkel beta (β), der 0-20 Grad beträgt, gebogen zu werden,
wobei Teile (9), die von einer äußeren Oberfläche der Hülle (6) des Verbindungsstücks vorstehen, und/oder Aussparungen (10) und Vorsprünge (9) dazwischen in dem Verbindungsstück (1) gebildet worden sind,
wobei die benachbarten vorstehenden Teile (9) und/oder Aussparungen (10) in einem Abstand zueinander angeordnet worden sind,
wobei der Abstand zwischen den benachbarten vorstehenden Teilen (9) und/oder Aussparungen (10) derart angeordnet worden ist, dass in einer gebogenen Position die Seiten (12, 13) der benachbarten vorstehenden Teile und/oder Aussparungen angeordnet worden sind, den Biegungsgrad des Verbindungsstücks zu begrenzen, wenn die Wände (12, 13) der vorstehenden Teile (9) und/oder der Aussparungen (10) in Kontakt miteinander sind,
wobei das Verbindungsstück (1) dazu konfiguriert worden ist, Winkeländerungen einer anderen Größenordnung in einer ersten Längsebene, wie etwa einer vertikalen Ebene, als in einer quer dazu verlaufenden Längsebene, wie etwa einer horizontalen Ebene, zuzulassen,
wobei die Förderrohranordnung einen ersten Förderrohrabschnitt (20) und einen zweiten Förderrohrabschnitt (21) umfasst und das Verbindungsstück (1) zwischen dem ersten Förderrohrabschnitt und dem zweiten Förderrohrabschnitt ist, wodurch das Verbindungsstück von dem ersten Ende (3) davon mit dem ersten Förderrohrabschnitt (20) und von dem zweiten Ende (4) davon mit dem zweiten Förderrohrabschnitt (21) verbunden ist,
wobei die vorstehenden Teile (9) und/oder die Aussparungen (10) Segmente umfassen, die so angeordnet sind, dass sie entlang des Umfangs des Verbindungsstücks (1) verteilt sind,
wobei, an einer Verbindung zwischen dem Verbindungsstück (1) und dem ersten Förderrohrabschnitt (20) und/oder dem zweiten Förderrohrabschnitt (21), ein Verbindungs-Muffenteil (22) der Förderrohranordnung dazu angeordnet ist, verwendet zu werden, welches Verbindungs-Muffenteil dazu angeordnet ist, den Verbindungsbereich des ersten Förderrohrabschnitts (20) oder des zweiten Förderrohrabschnitts (21) und das in dem Verbindungs-Muffenteil (22) angeordnete Verbindungsstück (1) zu umschließen, und
wobei das Verbindungs-Muffenteil (22) als eine Schweißmuffe konfiguriert worden ist, die Heizmittel, wie etwa einen Widerstand (43), umfasst.

2. Förderrohranordnung nach Anspruch 1, wobei die vorstehenden Teile (9) und/oder die Aussparungen (10) ringförmige Abschnitte umfassen.

3. Förderrohranordnung nach einem der Ansprüche 1 oder 2, wobei die Wanddicke (s) des Verbindungsstücks (1) in dem Abschnitt, der vorstehende Teile (9) und/oder Aussparungen (10) umfasst, kleiner ist als in dem ersten und/oder dem zweiten Verbindungsbereich (7, 8) des Verbindungsstücks.

4. Förderrohranordnung nach einem der Ansprüche 1 - 3, wobei der Abschnitt, der vorstehende Teile (9) und/oder Aussparungen (10) umfasst, in dem Verbindungsstück (1) in einem Abschnitt zwischen dem ersten Verbindungsbereich (7) und dem zweiten Verbindungsbereich (8) angeordnet worden ist, zum Beispiel in einem mittleren Abschnitt des Verbindungsstücks.

5. Förderrohranordnung nach einem der Ansprüche 1 - 4, wobei in der Phase des Bildens einer Verbindung der Rohrverbindungsanordnung, durch Drehen des Verbindungsstücks (1) ein gewünschter Winkelbereich bereitgestellt wird, der das Biegen in dem Verbindungsstück in eine gewünschte Biegeebene zulässt.

6. Verfahren zum Bilden einer Förderrohranordnung eines pneumatischen Materialfördersystems, welche Förderrohranordnung nach einem der Ansprüche 1 bis 5 ist, umfassend zumindest einen ersten Förderrohrabschnitt (20) und einen zweiten Förderrohrabschnitt (21), eine Verbindungsmuffe (22), und ein Verbindungsstück (1) zwischen dem ersten Förderrohrabschnitt (20) und dem zweiten Förderrohrabschnitt (21), in welchem Verfahren der erste Förderrohrabschnitt (21) mit dem zweiten Rohrabschnitt über das Verbindungsstück verbunden wird, durch Einsetzen des Endes eines der miteinander zu verbindenden Rohrabschnitte (21, 21, 1) in die Verbindungsmuffe (22) und durch Bilden einer thermoplastischen Verbindung mit dem einen der Rohrabschnitte (20, 21) und der Verbindungsmuffe (22), und mit dem Verbindungsstück (1) und der Verbindungsmuffe (22).

7. Verfahren nach Anspruch 6, wobei in der Förderrohranordnung die Richtung eines Kanals der Förderrohrabschnitte durch Biegen des zwischen dem ersten Förderrohrabschnitt (20) und dem zweiten Förderrohrabschnitt (21) angeordneten Verbindungsstücks (1) in einer ersten Ebene, wie etwa einer vertikalen Ebene, um einen Winkel alpha (α) und/oder in einer zweiten Ebene, wie etwa einer horizontalen Ebene, um einen Winkel beta (β) geändert wird.

8. Verfahren nach einem der Ansprüche 6 - 7, wobei zumindest einer der Förderrohrabschnitte (20, 21) gebildet wird durch Anordnen eines Kunststoffmaterialrohrs (26, 28) über einem Verstärkungsrohr (25, 27) oder eines Verstärkungsrohrs in dem Kanalraum eines Kunststoffmaterialrohrs durch Erwärmen des Kunststoffmaterialrohrs (26, 28) und durch Bewegen des Kunststoffmaterialrohrs und/oder des Verstärkungsrohrs relativ zueinander, um so einen Förderrohrabschnitt zu bilden, wobei die innere Oberfläche die innere Oberfläche des Verstärkungsrohrs ist und die äußere Oberfläche die äußere Oberfläche des Kunststoffmaterialrohrs ist.

## Revendications

1. Agencement de tuyau de transport d'un système pneumatique de transport de matériau, comprenant une pièce de raccordement (1) pour des raccordements de tuyau, laquelle pièce de raccordement (1) comprend une enveloppe tubulaire (2) présentant une première extrémité (3) et une seconde extrémité (4), laquelle pièce de raccordement comprend un canal (5) entre la première extrémité (3) et la seconde extrémité (4), le canal (5) étant délimité par une surface interne (6) de l'enveloppe de la pièce de raccordement, laquelle pièce de raccordement comprend une première zone de raccordement (7) s'étendant jusqu'à une certaine distance de la première extrémité (3) et une seconde zone de raccordement (8) s'étendant depuis la seconde extrémité (4) jusqu'à une certaine distance, laquelle pièce de raccordement a été configurée pour être courbée dans un premier plan, tel qu'un plan vertical, d'un angle alpha (α) qui est compris de 0 à 20 degrés, et/ou dans un second plan, tel qu'un plan horizontal, d'un angle bêta (β) qui est compris de 0 à 20 degrés,
dans lequel des parties faisant saillie (9) à partir d'une surface externe de l'enveloppe (6) de la pièce de raccordement et/ou des évidements (10) et des saillies (9) entre ceux-ci ont été formés dans la pièce de raccordement (1), dans lequel les parties saillantes (9) et/ou évidements (10) adjacent(e)s ont été agencés à une certaine distance les uns des autres, dans lequel la distance entre les parties saillantes (9) et/ou évidements (10) adjacent(e)s a été agencée de telle sorte que, dans une position courbée, les côtés (12, 13) des parties saillantes et/ou évidements adjacent(e)s ont été agencés pour limiter le degré de la courbure de la pièce de raccordement lorsque les parois (12, 13) des parties saillantes (9) et/ou des évidements (10) sont en contact les unes avec les autres,
dans lequel la pièce de raccordement (1) a été configurée pour permettre des changements angulaires d'une ampleur dans un premier plan longitudinal, tel qu'un plan vertical, différente de l'ampleur dans un plan longitudinal transversal à celui-ci, tel qu'un plan horizontal,
dans lequel l'agencement de tuyau de transport comprend une première section de tuyau de transport (20) et une seconde section de tuyau de transport (21) et la pièce de raccordement (1) est entre la première section de tuyau de transport et la seconde section de tuyau de transport, de telle sorte que la pièce de raccordement est raccordée à partir de sa première extrémité (3) jusqu'à la première section de tuyau de transport (20) et à partir de sa seconde extrémité (4) jusqu'à la seconde section de tuyau de transport (21),
dans lequel les parties saillantes (9) et/ou les évidements (10) comprennent des segments agencés de manière à être répartis le long de la circonférence de la pièce de raccordement (1),
dans lequel, au niveau d'un raccordement entre la pièce de raccordement (1) et la première section de tuyau de transport (20) et/ou la seconde section de tuyau de transport (21), une partie de manchon de raccordement (22) de l'agencement de tuyau de transport est agencée pour être utilisée, laquelle partie de manchon de raccordement est agencée pour entourer la zone de raccordement de la première section de tuyau de transport (20) ou de la seconde section de tuyau de transport (21) et la pièce de raccordement (1) disposée à l'intérieur de la partie de manchon de raccordement (22), et
dans laquelle la partie de manchon de raccordement (22) a été configurée en tant que manchon de soudage, comprenant un moyen de chauffage, tel qu'une résistance (43).

2. Agencement de tuyau de transport selon la revendication 1, dans lequel les parties saillantes (9) et/ou les évidements (10) comprennent des sections annulaires.

3. Agencement de tuyau de transport selon l'une quelconque des revendications 1 ou 2, dans lequel l'épaisseur (les épaisseurs) de paroi de la pièce de raccordement (1) est plus petite dans la section comprenant des parties saillantes (9) et/ou des évidements (10) que dans la première et/ou la seconde zone de raccordement (7, 8) de la pièce de raccordement.

4. Agencement de tuyau de transport selon l'une quelconque des revendications 1 à 3, dans lequel la section comprenant des parties saillantes (9) et/ou des évidements (10) a été agencée dans la pièce de raccordement (1) dans une section entre la première zone de raccordement (7) et la seconde zone de raccordement (8), par exemple dans une section médiane de la pièce de raccordement.

5. Agencement de tuyau de transport selon l'une quelconque des revendications 1 à 4, dans lequel, au stade de la formation d'un raccordement de l'agencement de raccordement de tuyau, par rotation de la pièce de raccordement (1), il est prévu une plage angulaire souhaitée permettant la courbure dans la pièce de raccordement jusqu'à un plan de courbure souhaité.

6. Procédé destiné à former un agencement de tuyau de transport d'un système pneumatique de transport de matériau, lequel agencement de tuyau de transport est selon l'une quelconque des revendications 1 à 5, comprenant au moins une première section de tuyau de transport (20) et une seconde section de tuyau de transport (21), un manchon de raccordement (22), et une pièce de raccordement (1) entre la première section de tuyau de transport (20) et la seconde section de tuyau de transport (21), procédé dans lequel la première section de tuyau de transport (21) est raccordée à la seconde section de tuyau par le biais de la pièce de raccordement en insérant l'extrémité de l'une des sections de tuyau (21, 21, 1) à raccorder l'une à l'autre dans le manchon de raccordement (22) et en formant un raccordement thermoplastique avec ladite section parmi les sections de tuyau (20, 21) et le manchon de raccordement (22), et avec la pièce de raccordement (1) et le manchon de raccordement (22).

7. Procédé selon la revendication 6, dans lequel, dans l'agencement de tuyau de transport, la direction de l'un des canaux des sections de tuyau de transport est modifiée par courbure de la pièce de raccordement (1) agencée entre la première section de tuyau de transport (20) et la seconde section de tuyau de transport (21) dans un premier plan, tel qu'un plan vertical, d'un angle alpha (α) et/ou dans un second plan, tel qu'un plan horizontal, d'un angle bêta (β).

8. Procédé selon l'une quelconque des revendications 6 à 7, dans lequel au moins l'une des sections de tuyau de transport (20, 21) est formée en agençant un tuyau en matière plastique (26, 28) sur un tuyau de renfort (25, 27) ou un tuyau de renfort dans l'espace de canal d'un tuyau en matière plastique en chauffant le tuyau en matière plastique (26, 28) et en déplaçant le tuyau en matière plastique et/ou le tuyau de renfort l'un par rapport à l'autre, de telle sorte que soit formée une section de tuyau de transport, dans lequel la surface interne est la surface interne du tuyau de renfort et la surface externe est la surface externe du tuyau en matière plastique.
